# EUROPÄISCHE PATENTSCHRIFT

(11) **EP 0 952 652 B1**
(45) Veröffentlichungstag und Bekanntmachung des Hinweises auf die Patenterteilung: **29.09.2004**
(21) Anmeldenummer: 99106284.5
(22) Anmeldetag: 16.04.1999
(51) Int. Cl.: H02G 3/04, F16L 11/15, F16L 11/118, F16L 11/22, B29C 53/30, B29C 47/12, B29C 47/20

(54) **Wellrohr mit überlappenden Flügelabschnitten**
Corrugated tubing with overlapped panel segments
Conduit annelé avec des segments de panneau superposés

(30) Priorität: 17.04.1998 DE 19817109; 17.04.1998 DE 19861048
(43) Veröffentlichungstag der Anmeldung: 27.10.1999
(73) Patentinhaber: Fränkische Rohrwerke Gebr. Kirchner GmbH & Co., 97486 Königsberg/Bayern (DE)
(72) Erfinder: Kirchner, Otto, 97486 Königsberg (DE)
(74) Vertreter: Schwabe - Sandmair - Marx

(56) Entgegenhaltungen:
- EP-A- 0 826 559

## Beschreibung

Die Erfindung betrifft ein Wellrohr, insbesondere auch als Halbware, wie es im Stand der Technik beispielsweise als Kabelschutzrohr eingesetzt wird.

Bei Kabelschutzrohren besteht allgemein das Bedürfnis, daß die von den entsprechenden Rohren aufzunehmenden Kabel in diese einzuziehen oder einzulegen sind. Es ist relativ arbeitsaufwendig, geschlossene Wellrohre mit den elektrischen Leitungen zu bestücken, indem diese in das Rohr eingezogen werden. Außerdem ist es in dem Fall, daß ein Kabel ausgetauscht werden muß bzw. neue Kabel einzuziehen sind, relativ umständlich und arbeitsaufwendig, derlei Tätigkeiten durchzuführen. Dementsprechend sind Wellrohre entwickelt worden, die in Längsrichtung einen Schlitz haben, über den die zu schützenden elektrischen Leitungen in das Wellrohr eingelegt werden können. Hier gibt es diverse Vorgehensweisen, diese Wellrohre als Kabelschutzrohre mit Verschlußmechanismen nach dem Einlegen der elektrischen Leitungen zu verschließen. Sowohl hakenartige Konstruktionen als auch Reißverschlußartige Konstruktionen sind im Stand der Technik zu finden. Die meisten realisierten Ausführungsformen haben jedoch den Nachteil, daß durch die Verschlußmechanismen eine Versteifung des Wellrohres erfolgt, bzw. daß sich derartige Verschlußmechanismen in Biegungsbereichen des Wellrohres unter Zug- und Druckbelastung wieder öffnen und die Kabel aus den ungewollt geöffneten Wellrohren hervorquellen.

Die EP-A-0 826 559 bezieht sich auf einen Kabelbaum, der in Kraftfahrzeugen verwendet wird und eine Vorrichtung, um ihn zu schützen. Genauer gesagt betrifft die Erfindung ein Wellrohr, durch das der Kabelbaum geführt und geschützt wird.

Es ist die Aufgabe gemäß der vorliegenden Erfindung, ein neues Wellrohr, insbesondere auch als Halbware, zur Verfügung zu stellen, das die oben genannten Nachteile des Standes der Technik nicht aufweist.

Diese Aufgabe wird durch ein Wellrohr, insbesondere auch als Halbware mit den Merkmalen nach Anspruch 1 gelöst.

Das heißt, das Wellrohr weist zwei Bereiche und im Querschnitt prinzipiell zwei Flügel auf, die einander gegenüberliegen, wobei der eine Flügel bzw. der eine Bereich über den anderen Flügel bzw. den anderen Bereich schnappend greifen kann, um so das Wellrohr zu verschließen. Dabei sollte nach Möglichkeit die Wellung insbesondere auch in dem Bereich der Überlappung in beiden Flügeln fortgesetzt werden. Auf diese Weise können die beiden Flügel oder Bereiche des erfindungsgemäßen Wellrohres einander nicht nur überlappend umgreifen, sondern auch die in den beiden Flügeln ausgebildeten Wellungen können ineinander greifen, um auf diese Weise einen besonders sicheren und widerstandsfähigen Verschluß zu bilden.

Als Beispiel für ein entsprechendes Wellrohr kann etwa ein Wellrohr angesehen werden, das im geschlossenen Zustand quadratisch oder rechteckig ist. Dabei kann das Wellrohr als Halbware so ausgebildet sein, daß trapezförmig ausgebildet ist und an dem breiteren Bereich des Trapezes, der in etwa die doppelte Breite des schmalen Bereiches des Trapezes aufweisen sollte, könnte eine Einschnürung vorgesehen sein, so daß, wenn diese Art von Wellrohr entlang des Einschnittes aufschlitzt wird, die beiden Flügel einander überlappend zusammengedrückt werden könnten, so daß der eingeschnürte Bereich an dem einen Flügel das Außenprofil des anderen Flügels umgreifen und damit hintergreifen kann. Auf diese Weise läßt sich durch die Längsschlitzung das Wellrohr in der Form der Halbware öffnen, die Kabel lassen sich über den Längsschlitz einlegen und anschließend können die Flanken des Wellrohres zusammengedrückt werden, so daß die einwärts erstreckten, bzw. wenigstens ein einwärts gerichteter Abschnitt an einem der Flügel einen Außenbereich des anderen Flügels umgreifen bzw. hintergreifen kann, um das Wellrohr zu verschließen.

Festzuhalten bleibt, daß die Form des Wellrohres, sei sie im Querschnitt symmetrisch oder unsymmetrisch, einen Bereich am Umfang aufweisen muß, der einen anderen Bereich des Wellrohres und damit einen anderen Flügel des Wellrohres, sobald dieses in axialer Längsrichtung geschlitzt und damit geöffnet ist, den anderen Flügel des Wellrohres am Außenumfang hintergreifen kann, um den Schlitz zu verschließen und damit die elektrischen Leitungen sicher aufzunehmen.

Entsprechend lassen sich natürlich auch andere querschnittliche Formen äußerst vorteilhaft für ein erfindungsgemäßes Wellrohr einsetzen. Hier ist ganz besonders die Herzform eines entsprechenden Wellrohrs im Querschnitt hervorzuheben, das heißt, das Wellrohr als Halbware ist herzförmig ausgebildet. Ist das Wellrohr fertiggestellt, das heißt, wenn der Längsschlitz des Wellrohres geöffnet ist und die beiden einander gegenüberliegenden Bereiche bzw. Flügel des Wellrohres einander umgreifend miteinander verrastet sind, kann das sich ergebende Wellrohr kreisförmig, nahezu kreisförmig oder oval sein.

Vorteilhafterweise sind zwecks der Herstellung des Wellrohres, das heißt bei dem erfindungsgemäßen Wellrohr als unfertiger Halbware, die einander gegenüberliegenden Bereiche bzw. Flügel des Wellrohres über einen Verbindungsabschnitt in Längsrichtung miteinander verbunden.

Um das erfindungsgemäße Wellrohr als Halbware zur Fertigware weiter zu verarbeiten, ist dann in einem fortgeschrittenen Fertigungsstadium der Verbindungsabschnitt aufzutrennen. Vorteilhafterweise, da der Verbindungsabschnitt beispielsweise als die Wellungen störender Steg ausgebildet sein kann, wird der gesamte Verbindungssteg beispielsweise durch zwei Schnitte in Längsrichtung, die in Fertigungsrichtung über zwei versetzt zueinander angeordnete Sägeblätter ausgeführt werden können, entfernt. Es ergibt sich dann ein klaffender Längsschlitz bzw. Längsspalt und es können, wenn die beiden Bereiche bzw. Flügel des Wellrohres als Fertigware einander umgreifend übereinander gerastet werden, die Wellungen der beiden Flügel ungestört ineinander greifen.

Vorteilhafterweise ist an dem Umfang des erfindungsgemäßen Wellrohres, dem Schlitz gegenüber, ein Schwenkfunktionsabschnitt vorgesehen, der insbesondere scharnierartig ausgebildet sein kann. Dieser Schwenkfunktionsabschnitt ist besonders von Vorteil, weil ein Wellrohr durch seine Wellungen stabilisiert wird und weil es bei Verformungen des Wellrohres dazu kommen kann, daß die Wellungen starke Rückformungskräfte in Radialrichtung erzeugen. Wenn folglich die Flügel einander überlappend umgreifen, können die starren Wellungen radial nach außen gerichtete Spannungen erzeugen, die eventuell dazu führen können, daß sich der Längsschlitz wieder öffnet, insbesondere wenn das Wellrohr über enge Biegungen geführt wird.

Dementsprechend ist es von Vorteil, wenn ein Schwenkfunktionsabschnitt angeordnet ist, der ausgebildet ist, um die Wellungen insbesondere dem Schlitz gegenüberliegend strukturell zu schwächen, so daß beim Zuschnappen bzw. Verrasten der beiden Flügel miteinander von dem Scharnierfunktionsabschnitt ansonsten auftretende Rückformungsspannungen abgemildert oder vollständig durch diesen kompensiert werden.

Vorteilhaft ist es, wenn sich bei dem erfindungsgemäßen Wellrohr als Halbware im Querschnitt eine Symmetrieebene in Längsrichtung des Wellrohres erstreckt, so daß der Schwenkfunktionsabschnitt symmetrisch zu dieser Symmetrieebene ist. Dabei sollte vorteilhafterweise auch der Verbindungsabschnitt symmetrisch zu dieser Symmetrieebene ausgebildet sein. Auch die beiden Bereiche bzw. Flügel des Wellrohres als Halbware sollten vorteilhafterweise symmetrisch zu dieser Symmetrieebene ausgebildet sein.

Vorteilhafterweise verschwinden die Wellungen am Schwenkfunktionsabschnitt von außen nach innen oder auch von innen nach außen. Der Schwenkfunktionsabschnitt kann dabei bevorzugt eine in etwa dreieckige Form aufweisen, die auf einer Seite offen ist. Dabei ist der offene Bereich des Schwenkfunktionsabschnittes, der bevorzugt radial nach innen vorgesehen ist, derart, daß die Flanken des Schwenkfunktionsabschnittes im überlappend umgriffenen Zustand der Bereiche bzw. Flügel des Wellrohres nahezu oder unmittelbar aneinander stoßen, so daß dann die Flanken des Schwenkfunktionsabschnittes stabilisierend aneinander anliegen, so daß die Wellungen im Bereich des Schwenkfunktionsabschnittes praktisch ohne Unterbrechung in Umfangsrichtung fortlaufen.

Vorteilhafterweise können die Wellungen des einen Flügels, beispielsweise am Innenumfang relativ zu den Wellungen am anderen Flügel, insbesondere am Außenumfang, so geformt sein, daß sie sich ineinander verkeilen. Das heißt die Wellungen am Innenumfang des einen Flügels sollten exakt in die Außenform der Wellungen des anderen Flügels eingreifen können oder etwas größer ausgebildet sein, so daß sie verklemmend ineinander greifen können.

Um ein entsprechend geformtes Wellrohr als Halbware herstellen zu können, ist es erforderlich, zu berücksichtigen, daß über den Umfang des Wellrohres als Halbware mit stark differierenden Materialmengen gearbeitet werden muß. Das heißt, eine Extruderdüse muß im Bereich der Flügel des Wellrohres mit Merkmalen gemäß der Erfindung als Halbware wesentlich mehr Kunststoffmaterial anbieten als beispielsweise an dem Bereich, der dem Verbindungsbereich gegenüber liegt, insbesondere am Scharnierfunktionsabschnitt.

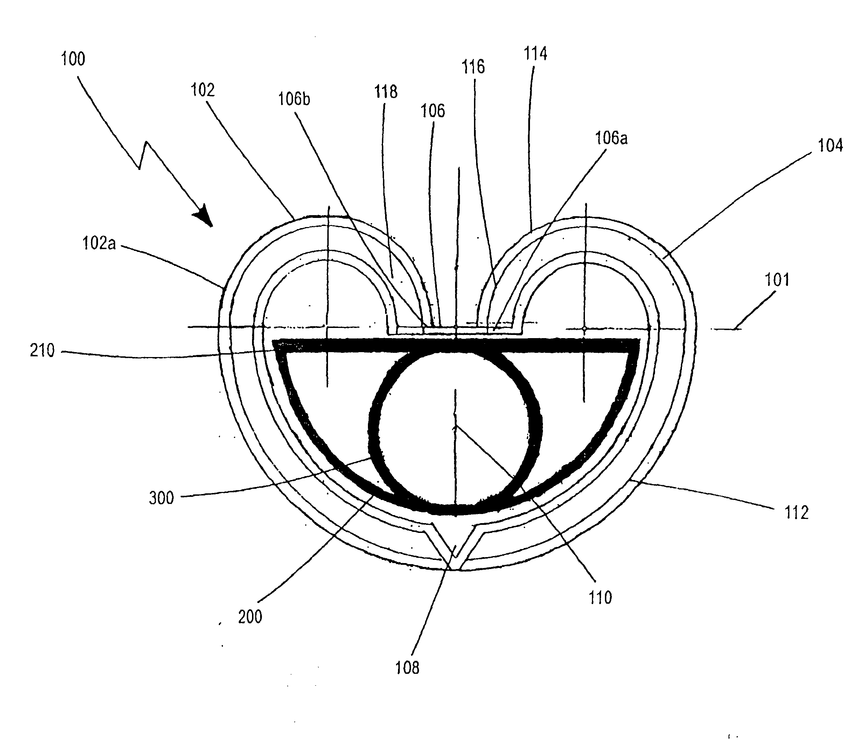

Nachfolgend wird die vorliegende Erfindung anhand einer bevorzugten Ausführungsform unter Bezugnahme auf die Figur näher erörtert. Dabei werden weitere Merkmale, Zielsetzungen und Vorteile gemäß der Erfindung offenbar.

Die Figur zeigt einen Querschnitt durch eine bevorzugte Ausführungsform eines Wellrohres.

Die Ausführungsformsform gemäß der Figur stellt ein als Halbware herzförmiges Wellrohr 100 dar.

Das Wellrohr 100 ist symmetrisch zu einer Symmetrieebene 110, die sich in Längsrichtung des Wellrohres, das als Halbware dargestellt ist, erstreckt.

Eine Ebene 101 ist eingezeichnet, entlang derer eine Entformung der Formbacken erfolgt, mittels derer das Wellrohr 100 als Halbware mittels eines Korrugators hergestellt wird. Das heißt, der Maschinentisch des Korrugators ist parallel zu der Ebene 110. Da Korrugatoren im Stand der Technik hinreichend bekannt sind, wird auf die vielfältigen Beschreibungen derartiger Fertigungsinstrumente verwiesen, ohne daß ein Korrugator hier im einzelnen beschrieben wird.

Das Wellrohr 100 weist zwei Bereiche bzw. Flügel 102, 104 auf, die symmetrisch zu der Symmetrieebene 110 ausgebildet und angeordnet sind. Die beiden Flügel 102, 104 sind über einen Verbindungsbereich 106 miteinander verbunden. Dieser Verbindungsbereich 106 ist lediglich aus fertigungstechnischen Gründen erforderlich und wird später entfernt. Das heißt, es werden Schnitte angesetzt, so daß die Bereiche 106a und 106b einschließlich des Verbindungsbereichs 106 abgesägt werden. Auf diese Weise ergeben sich freie Wellungsendbereiche, die ineinander greifen können.

Dabei liegt der Abschnitt 102a des Flügels 102 innerhalb des Flügels 104. Die Wellungsberge 114 des Flügels 104 bilden dann den Außenbereich des Wellrohrs 100 über dem innenliegenden Flügel 102a. Die Innenkonturen 116 der Wellungen treten in Eingriff mit den Außenkonturen der Wellungsabschnitte 118 des Flügels 102 im Überlappungsbereich 102a.

Dem Verbindungsbereich bzw. Verbindungsabschnitt 106 gegenüber liegt ein Schwenkfunktionsabschnitt 108, der in dem an das Wellrohr 100 angelegten Querschnitt dreiecksförmig ist. In diesem Bereich verschwinden die Wellungen 112, das heißt das Wellungstal nähert sich im Bereich des Schwenkfünktionsabschnittes dem Wellungsberg an.

Ist das in der Figur als Halbware dargestellte Wellrohr 100 derart in Längserstrekkunasrichtung des Wellrohres aufgesetzt, daß der Verbindungsabschnitt 106 und die daran angrenzenden Bereiche 106a, 106b entfernt sind, indem die Wellungen durch die Ausformung des Verbindungsabschnitts 106 gestört sind, und greifen die so bearbeite ten Flügel 102, 104 überlappend ineinander, wird der von dem Schwenkfunktionsabschnitt 108 bereitgestellte Spielraum, das heißt der Öffnungswinkel des Dreiecks, aufgebraucht und die Flanken des Dreiecks liegen aneinander an, während der nicht geschlossene Schenkel des Dreiecks bevorzugt wenigstens im wesentlichen vollständig aufgezehrt wird. Das heißt, die Schenkel des Schwenkfunktionsabschnittes liegen aneinander an und sind aneinander abgestützt.

## Patentansprüche

1. Wellrohr, insbesondere auch als Halbware, wobei das Wellrohr (100) im Querschnitt zwei Bereiche bzw. Flügel (102, 104) aufweist, die einander in einer Ebene (110) eines axialen Längsschnittes gegenüberliegen, so dass der eine Bereich (104) den anderen Bereich (102), das Wellrohr in Längsrichtung verschließend, teilweise zu umgeben vermag, **dadurch gekennzeichnet, dass** das Wellrohr (100) als Halbware im Querschnitt nach der Formgebung herzförmig ist.

2. Wellrohr nach Anspruch 1, **dadurch gekennzeichnet, dass** der eine Bereich bzw. Flügel (102) mit dem anderen Bereich bzw. Flügel (104) über einen Verbindungsabschnitt (106) verbunden ist.

3. Wellrohr nach Anspruch 2, **dadurch gekennzeichnet, dass** der Verbindungsabschnitt aufgetrennt wird, so dass die Bereiche bzw. Flügel (102, 104) zueinander bewegbar sind.

4. Wellrohr nach einem der Ansprüche 1 bis 3, **dadurch gekennzeichnet, dass** auch im Bereich der teilweisen Überlappung Wellungen (114, 116, 118) ausgebildet sind, die ineinander greifen.

5. Wellrohr nach einem der Ansprüche 1 bis 4, **dadurch gekennzeichnet, dass** der Verbindungsabschnitt (106) mit daran angrenzenden Wellungsbereichen (106a, 106b) abgetrennt wird.

6. Wellrohr nach einem der Ansprüche 1 bis 5, **dadurch gekennzeichnet, dass** ein insbesondere scharnierartiger Schwenkfunktionsabschnitt (108) vorgesehen ist, um die Bereiche senkrecht zu der Ebene, die bevorzugt die Symmetrieebene zum Querschnitt des Wellrohres ist, zu verschwenken, um das Wellrohr (100) zu öffnen bzw. zu schließen.

7. Wellrohr nach Anspruch 6, **dadurch gekennzeichnet, dass** am Schwenkfunktionsabschnitt (108) die Wellungen verschwinden.

8. Wellrohr nach einem der Ansprüche 6 oder 7, **dadurch gekennzeichnet, dass** der Schwenkfunktionsabschnitt (108) im Querschnitt eine in etwa dreieckige Form aufweist, die auf einer Seite, insbesondere der radial innenliegenden Seite, offen ist.

9. Wellrohr nach einem der Ansprüche 1 bis 7, **dadurch gekennzeichnet, dass** das Wellrohr (100) symmetrisch zu der Symmetrieebene (110) ist.

10. Wellrohr nach einem der Ansprüche 1 bis 10, **dadurch gekennzeichnet, dass** im Umgriffsbereich (102a) die Wellungen des einen Bereichs bzw. Flügels (104) in die Wellungen des anderen Bereichs bzw. Flügels (102) insbesondere verklemmend eingreifen.

## Claims

1. Corrugated tube, in particular also as a semi-finished product, wherein the corrugated tube (100) in cross section has two regions or wings (102, 104) which lie opposite one another in a plane (110) of an axial longitudinal section so that one region (104) can partially encompass the other region (102) to close the corrugated tube in the longitudinal direction, **characterized in that** the corrugated tube (100) as semi-finished product is heart-shaped in cross section following shaping.

2. Corrugated tube according to Claim 1, **characterized in that** one region or wing (102) is connected to the other region or wing (104) via a connecting section (106).

3. Corrugated tube according to Claim 2, **characterized in that** the connecting section is divided so that the regions or wings (102, 104) can be moved with respect to one another.

4. Corrugated tube according to any of Claims 1 to 3, **characterized in that** corrugations (114, 116, 118) are also made in the region of partial overlapping, said corrugations engaging in one another.

5. Corrugated tube according to any of Claims 1 to 4, **characterized in that** the connecting section (106) is divided by adjoining corrugation regions (106a, 106b).

6. Corrugated tube according to any of Claims 1 to 5, **characterized in that** there is an in particular hinge-like pivot function section (108) for pivoting the regions at right angles to the plane, which is preferably the plane of symmetry with respect to the cross section of the corrugated tube, in order to open and close the corrugated tube (100).

7. Corrugated tube according to Claim 6, **characterized in that** the corrugations disappear at the pivot function section (108).

8. Corrugated tube according to either of Claims 6 and 7, **characterized in that** the pivot function section (108) in cross section has an approximately triangular shape which is open on one side, in particular the radially inner side.

9. Corrugated tube according to any of Claims 1 to 7, **characterized in that** the corrugated tube (100) is symmetrical with respect to the plane of symmetry (110).

10. Corrugated tube according to any of Claims 1 to 9, **characterized in that** in the encompassing region (102a) the corrugations of one region or wing (104) engage in the corrugations of the other region or wing (102), in particular in a locking manner.

## Revendications

1. Conduit annelé, en particulier également sous forme de produit semi-fini, le conduit annelé (100) présentant en coupe transversale deux zones ou ailes (102, 104) qui sont opposées l'une à l'autre dans un plan (110) d'une coupe longitudinale axiale, de sorte que l'une des zones (104) peut entourer partiellement l'autre zone (102) en fermant le conduit annelé dans la direction longitudinale, **caractérisé en ce que** le conduit annelé (100) en tant que produit semi-fini possède une section transversale en forme de coeur après le façonnage.

2. Conduit annelé selon la revendication 1, **caractérisé en ce que** l'une des zones ou ailes (102) est reliée à l'autre zone ou aile (104) par l'intermédiaire d'une section de jonction (106).

3. Conduit annelé selon la revendication 2, **caractérisé en ce que** la section de jonction est séparée, de sorte que les zones ou ailes (102, 104) sont mobiles l'une par rapport à l'autre.

4. Conduit annelé selon l'une des revendications 1 à 3, **caractérisé en ce qu'**également dans la zone de chevauchement partiel, des annelures (114, 116, 118) sont formées, qui s'engagent les unes dans les autres.

5. Conduit annelé selon l'une des revendications 1 à 4, **caractérisé en ce que** la section de jonction (106) avec les zones annelées (106a, 106b) adjacentes est séparée.

6. Conduit annelé selon l'une des revendications 1 à 5, **caractérisé en ce qu'**une section fonctionnelle de basculement (108) en particulier de type charnière est prévue, afin de faire basculer les zones perpendiculairement au plan qui est de préférence le plan de symétrie de la section transversale du conduit annelé , afin d'ouvrir ou fermer le conduit annelé (100).

7. Conduit annelé selon la revendication 6, **caractérisé en ce que** les annelures disparaissent sur la section fonctionnelle de basculement (108).

8. Conduit annelé selon l'une des revendications 6 ou 7, **caractérisé en ce que** la section fonctionnelle de basculement (108) présente en coupe transversale une forme approximativement triangulaire qui est ouverte d'un côté, en particulier du côté situé à l'intérieur radialement.

9. Conduit annelé selon l'une des revendications 1 à 7, **caractérisé en ce que** le conduit annelé (100) est symétrique par rapport au plan de symétrie (110).

10. Conduit annelé selon l'une des revendications 1 à 9, **caractérisé en ce que**, dans la zone d'entourement (102a), les ondulations de l'une des zones ou ailes (104) s'engagent en particulier avec coincement dans les annelures de l'autre zone ou aile (102).
